# NEUE EUROPÄISCHE PATENTSCHRIFT

(11) **EP 2 655 775 B2**
(45) Veröffentlichungstag und Bekanntmachung des Hinweises auf die Entscheidung über den Einspruch: **07.12.2022**
(45) Hinweis auf die Patenterteilung: 28.01.2015
(21) Anmeldenummer: 11819064.4
(22) Anmeldetag: 21.12.2011
(51) Int. Cl.: E06B 1/64

(54) **FUGENDICHTUNGSBAND**
JOINT SEALING TAPE
BANDE D'ÉTANCHÉITÉ POUR JOINTS

(30) Priorität: 23.12.2010 DE 102010055788
(43) Veröffentlichungstag der Anmeldung: 30.10.2013
(73) Patentinhaber: Hanno-Werk GmbH & Co. KG, 30880 Laatzen (DE)
(72) Erfinder: KETHORN, Björn, 20255 Hamburg (DE); HOHLFELD, Andreas, 30974 Wennigsen (DE)
(74) Vertreter: Pfrang, Tilman
(86) Internationale Anmeldenummer: PCT/DE2011/002162
(87) Internationale Veröffentlichungsnummer: WO 2012/167762

(56) Entgegenhaltungen:
- EP-A1- 2 107 176
- EP-A2- 2 058 466
- WO-A1-96/33321
- WO-A2-2010/017947
- DE-A1- 19 641 415
- DE-A1-102008 037 292
- DE-C1- 19 514 420
- DE-U1- 20 009 674
- Prüfprotokoll 'EVT Band DUO'
- Produktinformationsblatt 'EVT Band DUO'
- Leimer, Gutachten zum Feuchtverhalten in porösen, hygroskopischen und kapillaraktiven Werkstoffen

## Beschreibung

Die vorliegende Erfindung betrifft ein Fugendichtungsband.

Fugendichtungsbänder zum Abdichten gegen Luftzug und Schlagregen sind beispielsweise aus der DE 19641415 C2 oder der DE 20009674 U1 bekannt und werden in der Bautechnik zum Abdichten von Fenster- und Türrahmen gegenüber einem Mauerwerk, zum Abdichten von Dachfenstern, zum Abdichten von Dachpfannenlagen usw. eingesetzt.

Ausgehend von diesem Stand der Technik liegt der Erfindung die Aufgabe zugrunde, solche Fugendichtungsbänder derart weiterzuentwickeln, dass die an sie gestellten Anforderungen hinsichtlich der Schlagregendichtheit, der Dampfdiffusionsoffenheit, der Wärmedämmung und der Luftdichtheit noch besser erfüllen. Zudem liegt der Erfindung die Aufgabe zugrunde, solche Dichtungsbänder derart weiterzuentwickeln, dass diese schnell und kostengünstig montierbar sind.

Diese Aufgabe wird mit einem Fugendichtungsband aus Schaumstoff gelöst, welches die in Anspruch 1 genannten Merkmale aufweist. Weiterbildungen und vorteilhafte Ausgestaltungen der Erfindung ergeben sich aus der nachfolgenden Beschreibung sowie den Unteransprüchen.

Erfindungsgemäß ist vorgesehen, dass ein Fugendichtungsband aus Schaumstoff eine oder vorzugsweise mehrere feuchtevariable oder feuchteadaptive Membranschichten aufweist.

Mit einem solchen Fugendichtungsband wird eine sichere Abdichtung von Fugen zwischen zusammengefügten Bauelementen im Hausbau, insbesondere zwischen Wandöffnungen einer Außenwand und Fenster- oder Türrahmen, erreicht, wobei vorteilhaft keine zusätzlichen Fugenbänder oder Hinterfüllmaterialien erforderlich sind. Da die Membranschichten feuchtevariabel bzw. feuchteadaptiv sind, ist vorteilhaft die Gefahr einer Verwechslung zwischen derjenigen Seite des Fugendichtungsbandes, welche im Einbauzustand nach innen weist, und derjenigen Seite des Fugendichtungsbandes, welche nach außen weist, ausgeschlossen. Vorteilhaft kann in einem Arbeitsgang eine äußere, mittlere und innere Abdichtung der Fuge zwischen zwei zusammengefügten Bauelementen erreicht werden. Durch die wenigstens eine feuchtevariable bzw. feuchteadaptive Membranschicht stellt sich die gewünschte Dichtheit des Fugendichtbandes abhängig von der Feuchtigkeit von selbst ein. Das Fugendichtungsband ist somit quasi ein intelligentes Fugendichtungsband und beim Einbau in die Fuge besteht keine Gefahr der Verwechslung von Innen- und Außenseite des Fugendichtungsbandes.

Eine Weiterbildung der Erfindung sieht vor, dass die Zusammensetzung der Membranschicht oder Membranschichten, dass die Anordnung der Membranschicht oder Membranschichten und/oder dass die Anzahl der Membranschichten derart gewählt sind, dass das Fugendichtungsband in dem Bereich, der an eine Atmosphäre mit hoher Feuchte angrenzt, weniger dicht gegenüber Wasserdampf ist, als in dem Bereich, der an eine Atmosphäre mit niedrigerer Feuchte angrenzt.

Als feuchtevariable Membranschicht kann vorteilhaft eine modifizierte Polyamid-Folie eingesetzt werden. Solche Folien zeichnen sich dadurch aus, dass deren Dampfdurchlässigkeit im feuchten Zustand deutlich höher ist als im trockenen Zustand. Die Folien haben also einen variablen s_{d}-Wert. Unter einem sd-Wert wird der Wasserdampf-Diffusionswiderstand eines Materials, auch als "diffusionsäquivalente Luftschichtdicke" bezeichnet, verstanden. Der sd-Wert mit der Einheit "m" berechnet sich aus der Schichtdicke des Materials multipliziert mit der Wasserdampfdiffusionswiderstandszahl des Materials, dem so genannten µ-Wert, wie in DIN EN ISO 12572:2001 definiert.

Geeignete Membranschichten sind beispielsweise in der DE19514420 C1 oder der WO 9633321 A1 als Materialien mit einem von der Umgebungsfeuchte abhängigen Wasserdampfdiffusionswiderstand offenbart. Der Inhalt der DE19514420 C1 bzw. der WO 9633321 A1 wird insbesondere hinsichtlich dieser Materialien durch ausdrücklichen Verweis in den Offenbarungsgehalt der vorliegenden Anmeldung aufgenommen.

Weitere geeignete Membranschichten sind beispielsweise in der DE 102008037292 A1 oder der WO 2010017947 A2 als feuchteadaptive Funktionsschichten offenbart. Der Inhalt der DE 102008037292 A1 bzw. der WO 2010017947 A2 wird insbesondere hinsichtlich dieser feuchteadaptiven Funktionsschichten durch ausdrücklichen Verweis in den Offenbarungsgehalt der vorliegenden Anmeldung aufgenommen.

Erfindungsgemäß ist vorgesehen, dass das Fugendichtungsband zwei Längsseiten sowie eine im Einbauzustand des Fugendichtungsbandes an die eine Fugenflanke angrenzende Ober- und eine im Einbauzustand des Fugendichtungsbandes an die gegenüberliegende Fugenflanke angrenzende Unterseite aufweist, wobei die Membranschicht oder Membranschichten jeweils in Längsrichtung zwischen Ober- und Unterseite sowie parallel bzw. nahezu parallel zu den Längsseiten verlaufen. Die Breite des Fugendichtungsbandes ist somit der Abstand zwischen zwei Längsseiten.

Eine Weiterbildung der Erfindung sieht vor, dass die Zusammensetzung der Membranschicht oder Membranschichten, dass die Anordnung der Membranschicht oder Membranschichten und/oder dass die Anzahl der Membranschichten derart gewählt sind, dass das Fugendichtungsband in dem Bereich, der an eine Atmosphäre mit hoher Feuchte angrenzt, dichter gegenüber Wasserdampf ist, als in dem Bereich, der an eine Atmosphäre mit niedrigerer Feuchte angrenzt.

Ein erfindungsgemäßes Fugendichtungsband ist universell für die Abdichtung einer Fuge zwischen zwei zusammengefügten Bauelementen, beispielsweise zwischen einem Baukörper, insbesondere einem Mauerwerk, und einem Rahmen oder dergleichen, insbesondere einem Fenster- oder Türrahmen, einsetzbar. Ein solches, in eine entsprechende Fuge eingebautes Fugendichtungsband hat den Vorteil, dass dieses jeweils auf der Seite bzw. dem Bereich, der einer höheren Diffusionsbelastung ausgesetzt ist, eine höhere Sperrwirkung hat. Das hat wiederum hat den Vorteil, dass beim Einbau eines erfindungsgemäßen Fugendichtungsbandes nicht darauf geachtet werden braucht, welche der beiden Längsseite des Fugendichtungsbandes zur Innenraumseite bzw. nach innen und welche zur Außenraumseite bzw. nach außen angeordnet ist. Der Einbau bzw. die Verlegung eines erfindungsgemäßen Fugendichtungsbandes ist somit unabhängig von der Laufrichtung des Bandes.

Die Membranschicht oder Membranschichten können wie Sperrschichten axial im Fugendichtungsband angeordnet sein, so dass diese nach dem Einbau des Fugendichtungsbandes im Wesentlichen quer zur Diffusionsrichtung angeordnet sind.

Ein erfindungsgemäßes Fugendichtungsband ist feuchtigkeitsvariabel, vorzugsweise derart, dass immer die Seite, die der feuchteren Atmosphäre ausgesetzt ist, diffusionsdichter ist. Dadurch wird erfindungsgemäß immer Feuchtigkeit aus der Fuge heraustransportiert und ein Hineindiffundieren von Feuchtigkeit in die Fuge verhindert.

Ein erfindungsgemäßes Fugendichtungsband funktioniert bei der in der nach RAL Gütegemeinschaft Fenster und Haustüren e. V. (RAL-Leitfaden zur Planung und Ausführung der Montage von Fenstern und Haustüren 2010) geforderten typischen Winter-Situation, bei welcher die Abdichtung zum Innenraum bzw. nach innen dichter sein soll als die Abdichtung zum Außenraum bzw. nach außen, da im Winter Innenräume eine größere Luftfeuchtigkeit als Außenräume bzw. die Außenatmosphäre aufweisen. Ein erfindungsgemäßes Fugendichtungsband funktioniert aber auch in der typischen Sommer-Situation, in der sich die Diffusion umkehrt und die Außenumgebung eine höhere Luftfeuchtigkeit aufweist.

Dadurch wird insgesamt eine ganzjährige Austrocknung der Fuge erreicht. So wird die RAL-Forderung des Schutzes der so genannten Anschlussfuge zwischen Baukörper und beispielsweise Fensterahmen vor außen- und raumseitigen Belastungen sichergestellt.

Es kann zweckmäßig sein, wenn wenigstens eine Membranschicht so ausgebildet ist, dass diese bei einer mittleren relativen Feuchte der sie umgebenden Atmosphäre von bis zu 50 % einen Wasserdampfdiffusionswiderstand (s_{d}-Wert) von kleiner 15 m diffusionsäquivalente Luftschichtdicke und bei einer mittleren relativen Feuchte der sie umgebenden Atmosphäre von mehr als 70 % einen Wasserdampfdiffusionswiderstand (s_{d}-Wert) von größer 30 m diffusionsäquivalente Luftschichtdicke aufweist.

Für bestimmte Einsatzwecke kann es auch vorteilhaft sein, wenn ein Fugendichtungsband mehrere unterschiedliche Dichtbereiche aufweist, indem die Zusammensetzung der Membranschicht oder Membranschichten, die Anordnung der Membranschicht oder Membranschichten und/oder die Anzahl der Membranschichten in einem Dichtbereich derart gewählt sind, dass das Fugendichtungsband in dem Bereich, der an eine Atmosphäre mit hoher Feuchte angrenzt, dichter gegenüber Wasserdampf ist, als in dem Bereich, der an eine Atmosphäre mit niedrigerer Feuchte angrenzt, und in einem anderen Dichtbereich derart gewählt sind, dass das Fugendichtungsband in dem Bereich, der an eine Atmosphäre mit hoher Feuchte angrenzt, weniger dicht gegenüber Wasserdampf ist, als in dem Bereich, der an eine Atmosphäre mit niedrigerer Feuchte angrenzt.

Es kann von Vorteil sein, wenn der Schaumstoff ein überwiegend offenzelliger Rohschaum ist.

Es kann aber auch von Vorteil sein, wenn der Schaumstoff ein überwiegend geschlossenzelliger Rohschaum ist, wie er beispielsweise in der EP 1 600 571 B1 als Schaumstoff mit einer Luftdurchlässigkeit von höchstens 50 l/m²s offenbart ist. Der Inhalt der EP 1 600 571 B1 wird insbesondere hinsichtlich des dort offenbarten Schaumstoffs durch ausdrücklichen Verweis in den Offenbarungsgehalt der vorliegenden Anmeldung aufgenommen.

Es kann zweckmäßig sein, wenn der Schaumstoff ein imprägnierter, vorzugsweise ein homogen imprägnierter Rohschaum ist. Ein solch imprägnierter Schaumstoff eignet sich besonders gut für die einfache und universelle Fugenabdichtung, wobei die Imprägnierung insbesondere für eine verzögerte Rückstellung des komprimierbaren, vorzugsweise vorkomprimierten Fugendichtungsbandes sorgt. Es kann ein Vorteil sein, wenn das Imprägnat flammhemmend ausgerüstet ist.

Eine vorteilhafte Ausgestaltung der Erfindung sieht vor, dass der Schaumstoff ein vorzugsweise derart mit Acrylaten imprägnierter Rohschaum ist, dass der Wasserdampfdiffusionswiderstand des im Einbauzustand vorliegenden Schaumstoffs kleiner ist als der Wasserdampfdiffusionswiderstand wenigstens einer, vorzugsweise jeder Membranschicht.

Eine Weiterbildung der Erfindung sieht vor, dass wenigstens eine Membranschicht aus Klebstoff, vorzugsweise aus einem Acrylathaftklebstoff oder einem Gemisch aus Acrylathaftklebstoff und Polyurethanklebstoff, gebildet ist.

Es kann zweckmäßig sein, wenn wenigstens eine Membranschicht aus wenigstens einem wasserfesten modifizierten Acrylat gebildet ist, wodurch hochleistungsfähige, feuchtevariable Membranschichten bereitgestellt werden, die je nach Zusammensetzung bei hoher Luftfeuchte diffusionsdichter sind als bei niedrigerer Luftfeuchtigkeit oder umgekehrt.

Es kann von Vorteil sein, wenn wenigstens eine Membranschicht aus einer modifizierten Polyamid-Folie gebildet ist, die vorzugsweise mit dem Schaumstoff verklebt ist.

Es kann auch vorteilhaft sein, wenn wenigstens eine Membranschicht aus einer Polyamid-Dispersion, vorzugsweise in Form eines Klebstoffs, gebildet ist.

Eine Weiterbildung der Erfindung sieht vor, dass das Auftragsgewicht eines Klebstoffs zur Bildung oder Mitbildung einer Membranschicht 60 bis 200 g/m², vorzugsweise 100 bis 150 g/m² beträgt. Für bestimmte Anwendungen kann es vorteilhaft sein, wenn das Auftragsgewicht 100 bis 119 g/m² beträgt. Für gewisse Anwendungen kann es vorteilhaft sein, wenn das Auftragsgewicht 120 bis 130 g/m² beträgt. Für manche Anwendungen kann es vorteilhaft sein, wenn das Auftragsgewicht 131 bis 150 g/m² beträgt.

Eine vorteilhafte Ausgestaltung der Erfindung sieht vor, dass der Klebstoff zur Bildung der Membranschicht eine Klebkraft nach AFERA 4001 von > 20 N/25 mm aufweist.

Es kann zweckmäßig sein, wenn wenigstens eine Membranschicht einen größeren Wasserdampfdiffusionswiderstand aufweist als der Schaumstoff.

Eine Weiterbildung der Erfindung sieht vor, dass wenigstens zwei Membranschichten eine voneinander unterschiedliche Zusammensetzung haben.

Eine vorteilhafte Ausgestaltung der Erfindung sieht vor, dass die Membranschicht oder Membranschichten innerhalb des Schaumstoffs angeordnet sind.

Eine Weiterbildung sieht vor, dass die Membranschicht oder Membranschichten zur Erfüllung verbesserter Diffusionswerte dauerelastisch sind, so dass die Membranschichten auch nach Alterung im komprimierten Zustand und anschließender Dekomprimierung bzw. Rückstellung dauerhaft elastisch bleiben und im Einbauzustand der Fugendichtungsbandes in einer Fuge jederzeit dicht an den Fugenflanken anliegen.

Es kann von Vorteil sein, wenn das Fugendichtungsband zusätzlich oder anstelle der innen liegenden Membranschichten wenigstens eine Membranschicht auf einer oder jeweils auf beiden Längsseiten aufweist.

Eine Weiterbildung der Erfindung sieht vor, dass bei Verwendung von mehreren Membranschichten diese jeweils den gleichen und/oder einen unterschiedlichen Abstand zwischen 5 mm und 100 mm voneinander aufweisen können. Für gewisse Anwendungsfälle kann es vorteilhaft sein, wenn der Abstand zwischen 5 mm und 13 mm beträgt. Für bestimmte Anwendungsfälle kann es vorteilhaft sein, wenn der Abstand zwischen 14 mm und 20 mm beträgt. Für manche Anwendungsfälle kann es vorteilhaft sein, wenn der Abstand zwischen 21 mm und 30 mm beträgt. Für ganz andere Anwendungsfälle kann es von Vorteil sein, wenn der Abstand zwischen 31 mm und 100 mm beträgt.

Eine Weiterbildung der Erfindung sieht vor, dass sich der Abstand zwischen zwei Membranschichten vorteilhaft vom Abstand zwischen zwei anderen Membranschichten unterscheidet.

Es bestimmte Einsatzfälle kann es zweckmäßig sein, wenn die Membranschicht bzw. die Membranschichten gleichmäßig über die Breite des Fugendichtungsbandes verteilt bzw. angeordnet sind.

Für gewisse Einsatzfälle kann es aber auch zweckmäßig sein, wenn die Membranschicht bzw. die Membranschichten ungleichmäßig über die Breite des Fugendichtungsbandes verteilt bzw. angeordnet sind.

So kann es für einige Einsatzfälle vorteilhaft sein, wenn die Membranschicht bzw. Membranschichten in der Nähe einer oder beider Längsseiten des Fugendichtungsbandes angeordnet sind. Es kann aber für einige andere Einsatzfälle auch vorteilhaft sein, wenn die Membranschicht bzw. Membranschichten weiter entfernt von einer oder beiden Längsseiten des Fugendichtungsbandes angeordnet sind.

Für manche Einsatzfälle kann es vorteilhaft sein, wenn der Abstand der Membranschichten von einer Längsseite zur anderen Längsseite des Fugendichtungsbandes variiert, vorzugsweise abnimmt und/oder zunimmt.

Eine Weiterbildung der Erfindung sieht vor, dass die durch wenigstens eine Membranschicht unterteilten in Längsrichtung verlaufenden Schaumstoffabschnitte derart unterschiedlich ausgebildet sind, dass das Fugendichtungsband in dem Bereich, der an eine Atmosphäre mit hoher Feuchte angrenzt, dichter gegenüber Wasserdampf ist, als in dem Bereich, der an eine Atmosphäre mit niedrigerer Feuchte angrenzt..

Eine Weiterbildung der Erfindung sieht vor, dass die durch wenigstens eine Membranschicht unterteilten in Längsrichtung verlaufenden Schaumstoffabschnitte derart unterschiedlich ausgebildet sind, dass das Fugendichtungsband in dem Bereich, der an eine Atmosphäre mit hoher Feuchte angrenzt, weniger dicht gegenüber Wasserdampf ist, als in dem Bereich, der an eine Atmosphäre mit niedrigerer Feuchte angrenzt.

Für manche Einsatzzwecke kann es aber auch vorteilhaft sein, wenn mehrer Dichtbereiche innerhalb eines Fugendichtungsbandes vorgesehen sind, indem in einem Dichtbereich die durch wenigstens eine Membranschicht unterteilten in Längsrichtung verlaufenden Schaumstoffabschnitte derart unterschiedlich ausgebildet sind, dass das Fugendichtungsband in dem Bereich, der an eine Atmosphäre mit hoher Feuchte angrenzt, weniger dicht gegenüber Wasserdampf ist, als in dem Bereich, der an eine Atmosphäre mit niedrigerer Feuchte angrenzt, und in einem anderen Dichtbereich die durch wenigstens eine Membranschicht unterteilten in Längsrichtung verlaufenden Schaumstoffabschnitte derart unterschiedlich ausgebildet sind, dass das Fugendichtungsband in dem Bereich, der an eine Atmosphäre mit hoher Feuchte angrenzt, dichter gegenüber Wasserdampf ist, als in dem Bereich, der an eine Atmosphäre mit niedrigerer Feuchte angrenzt.

Es kann vorteilhaft sein, wenn wenigstens zwei Schaumstoffabschnitte unterschiedliche Raumgewichte aufweisen.

Es kann zweckmäßig sein, wenn der Schaumstoff ein PUR-Schaumstoff, vorzugsweise ein PUR-Weichschaumstoff ist. Dieser stellt sich nach einer Vorkomprimierung besonders gut innerhalb der Fuge zurück und sorgt für eine dauerhafte Abdichtung.

Es kann vorteilhaft sein, wenn der Schaumstoff mehrere Funktionsbereiche aufweist, vorzugsweise einen ersten nach außen schlagregendichten Bereich, einen zweiten wärmedämmenden sowie schallmindernden Bereich und einen dritten nach innen luftdichten Bereich. Die Membranschichten sorgen hierbei vorteilhaft für eine Abgrenzung der vorgenannten Funktionsebenen bzw. der so genannten Funktionsbereiche, wie von der RAL Gütegemeinschaft Fenster & Haustüren e. V. gefordert. Es kann eine Wärmedämmung erreicht werden, welche allen Anforderungen der Energiereinsparverordnung beim Fenstereinbau und der VOB für Tischlerarbeiten gemäß DIN 18/355 erfüllt.

Es kann zweckmäßig sein, wenn das Fugendichtungsband komprimierbar, vorzugsweise vorkomprimiert ist.

Vorteilhaft kann das Fugendichtungsband in Rollenform vorkomprimiert und verzögert rückstellfähig sein.

Vorzugsweise beträgt die Dicke des Fugendichtungsbandes im nicht komprimierten Zustand zwischen 10 mm und 100 mm, vorzugsweise zwischen 18 mm bis 60 mm.

Eine Weiterbildung der Erfindung sieht vor, dass das Fugendichtungsband zur Abdichtung von Fugen zwischen zusammengefügten Bauelementen im Hausbau, insbesondere zwischen Wandöffnungen einer Außenwand und Fenster- oder Türrahmen, vorzugsweise ohne Zuhilfenahme zusätzlicher Fugenbändern oder Hinterfüllmaterialien, einsetzbar ist.

Weitere vorteilhafte Ausgestaltungen der Erfindung ergeben sich aus der Zeichnung in Zusammenhang mit deren Beschreibung, wobei nachfolgend die Erfindung anhand von Ausführungsbeispielen erläutert wird, die in der Zeichnung dargestellt sind. In dieser zeigen:
- Fig. 1: ein erfindungsgemäßes Fugendichtungsband im Querschnitt,
- Fig. 2: ein erfindungsgemäßes Fugendichtungsband in Einbauzustand innerhalb einer Fuge im Querschnitt,
- Fig. 3: einen Ausschnitt eines erfindungsgemäßen Fugendichtungsbandes in perspektivischer Darstellung mit Hauptblick auf eine Längsseite,
- Fig. 4: eine Längsseite, eine Querseite und eine Oberseite des in Fig. 3 dargestellten erfindungsgemäßen Fugendichtungsbands in aufgeklappter Darstellung,
- Fig. 5: ein erfindungsgemäßes Fugendichtungsband in Einbauzustand mit einem grafisch dargestellten Wasserdampfdiffusionsgradienten während einer typischen Winter-Situation;
- Fig. 6: das gleiche erfindungsgemäße Fugendichtungsband nach Fig. 5 in gleichen Einbauzustand mit einem grafisch dargestellten Wasserdampfdiffusionsgradienten während einer typischen Sommer-Situation;
- Fig. 7: eine grafische Darstellung des Diffusionswiderstandes (µ-Wert, s_{d}-Wert) eines erfindungsgemäßen Fugendichtungsbandes gegen die mittlere relative Feuchtigkeit bei 23 °C;
- Fig. 8: einen Ausschnitt eines erfindungsgemäßen Fugendichtungsbandes mit Selbstklebeschicht auf der Unterseite in perspektivischer Darstellung mit Hauptblick auf eine Längsseite,
- Fig. 9: eine Seitenansicht eines in Rollenform vorrätig gehaltenen und vorkomprimierten erfindungsgemäßen Fugendichtungsbandes,
- Fig. 10: eine Seitenansicht eines in Rollenform vorrätig gehaltenen und vorkomprimierten erfindungsgemäßen Fugendichtungsbandes mit einem bereits abgerollten, sich zurückstellenden Abschnitt,
- Fig. 11: eine Seitenansicht eines in Rollenform vorrätig gehaltenen und vorkomprimierten erfindungsgemäßen Fugendichtungsbandes mit einem bereits abgerollten, sich zurückstellenden Abschnitt, der eine erfindungsgemäße Anordnung der Membranschichten und
- Fig. 12: einen Aufbau zur Überprüfung der Wasserdampfdurchlässigkeit an erfindungsgemäßen und nicht erfindungsgemäßen Fugendichtungsbändern.

In der Zeichnung sind die für das Verständnis der Erfindung wesentlichen Merkmale dargestellt und erläutert. Werden in den Figuren gleiche Bezugsziffern verwendet, so bezeichnen diese gleiche Teile.

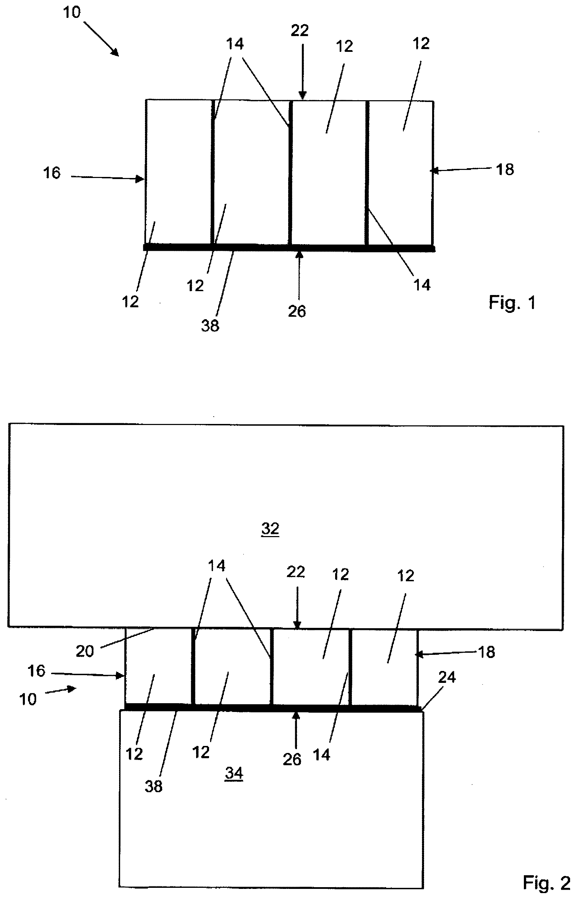

Fig. 1 zeigt ein erfindungsgemäßes Fugendichtungsband 10 im Querschnitt. Das Fugendichtungsband 10 besteht aus Schaumstoff 12 und weist drei feuchtevariable Membranschichten 14 auf. Das Fugendichtungsband 10 umfasst zwei Längsseiten 16, 18 sowie eine Oberseite 22 und eine Unterseite 26, wobei letztere - wie in Fig. 2 dargestellt - im Einbauzustand des Fugendichtungsbandes 10 einerseits 22 an die eine Fugenflanke 20 beispielsweise einer Außenwand 32 und andererseits 26 an die gegenüberliegende Fugenflanke 24 beispielsweise eines Fensterrahmens 34 stoßen. Die drei Membranschichten 14 verlaufen jeweils in Längsrichtung 28 zwischen Oberseite 22 und Unterseite 26 sowie parallel zu den Längsseiten 16, 18. Hierbei liegen alle Membranschichten 14 innerhalb des Schaumstoffs.

Vorteilhaft ist der Schaumstoff 12 ein überwiegend offenzelliger, homogen mit Acrylaten imprägnierter Rohschaum. Die feuchtevariablen Membranschichten 14 sind vorteilhaft aus einem Acrylathaftklebstoff gebildet, der die einzelnen Schaumstoffabschnitte 12 gleichzeitig vorteilhaft verbinden.

Wie in Fig. 2 dargestellt sind im Einbauzustand des Fugendichtungsbandes 10 die Membranschichten 14 quer zu einer möglichen Diffusionsrichtung des Wasserdampfes angeordnet, wobei die die Zusammensetzung der Membranschichten, die Anordnung der Membranschichten 14 und die Anzahl der Membranschichten 14 derart gewählt sind, dass das Fugendichtungsband 10 in dem Bereich, der an eine Atmosphäre mit hoher Feuchte angrenzt, dichter gegenüber Wasserdampf ist, als in dem Bereich, der an eine Atmosphäre mit niedrigerer Feuchte angrenzt.

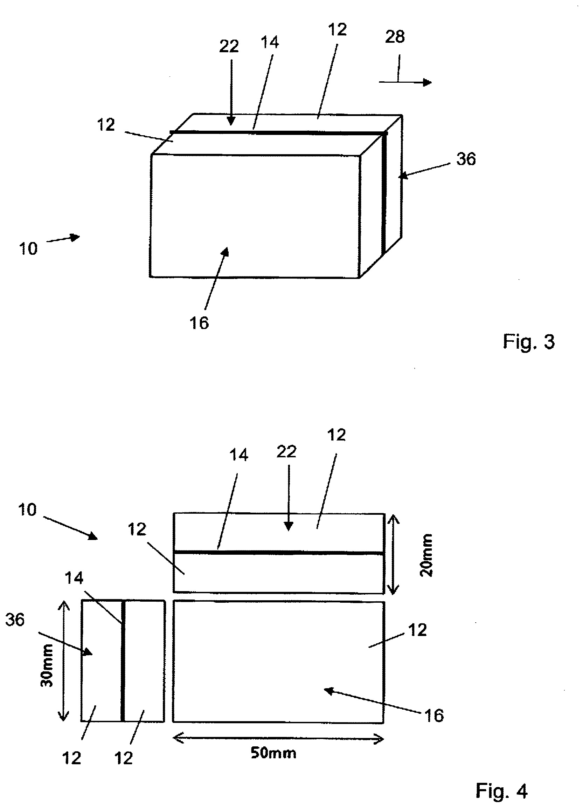

Fig. 3 zeigt zur besseren Veranschaulichung eines erfindungsgemäßen Fugendichtungsbandes 10 einen Abschnitt desselben mit einer innen liegenden Membranschicht 14 in perspektivischer Darstellung mit Hauptblick auf eine Längsseite 16. Neben der Längsseite 16 und der Oberseite 22 ist auch deutlich eine Querseite 36 zu erkennen. Fig. 4 zeigt die Längsseite 16, die Querseite 36 und die Oberseite 22 des in Fig. 3 dargestellten erfindungsgemäßen Fugendichtungsbands 10 noch einmal in aufgeklappter Darstellung. Selbstverständlich sind diese Seiten doppelt vorhanden.

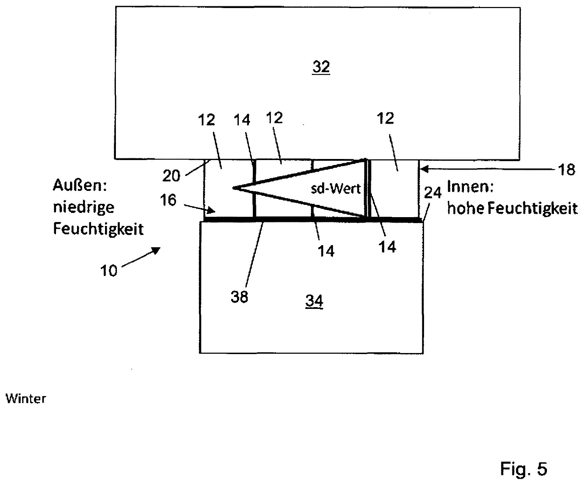

In Fig. 5 ist ein erfindungsgemäßes Fugendichtungsband 10 im Einbauzustand mit einem grafisch dargestellten Wasserdampfdiffusionsgradienten während einer typischen Winter-Situation dargestellt. Im Winter ist die Feuchtigkeit außen niedrig. Innen ist Feuchtigkeit dagegen hoch.

Unabhängig davon, welche der Längsseiten 16, 18 nach außen oder innen gerichtet ist, stellt sich bei dem erfindungsgemäßen Fugendichtungsband ein Wasserdampfdiffusionsgradient ein. Der Bereich des Fugendichtungsbandes 10, der an eine Atmosphäre mit hoher Feuchte angrenzt, ist dichter gegenüber Wasserdampf als der Bereich des Fugendichtungsbandes 10, der an eine Atmosphäre mit niedrigerer Feuchte angrenzt. Dadurch wird verhindert, dass Wasserdampf von innen in die Fuge eintritt, und gleichzeitig wird erreicht, dass vorhandener Wasserdampf aus der Fuge nach außen heraustritt.

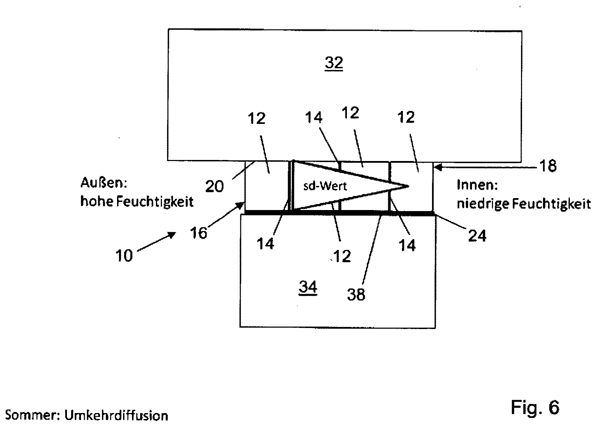

Fig. 6 zeigt das gleiche erfindungsgemäße Fugendichtungsband nach Fig. 5 im gleichen Einbauzustand mit einem grafisch dargestellten Wasserdampfdiffusionsgradienten während einer typischen Sommer-Situation. Im Sommer ist die Feuchtigkeit außen hoch. Innen ist die Feuchtigkeit dagegen niedriger.

Unabhängig davon, welche der Längsseiten 16, 18 nach außen oder innen gerichtet ist, stellt sich bei dem erfindungsgemäßen Fugendichtungsband ein Wasserdampfdiffusionsgradient ein, der umgekehrt zu dem Wasserdampfgradienten gemäß Fig. 5 ist. Es gilt zwar wiederum, dass der Bereich des Fugendichtungsbandes 10, der an eine Atmosphäre mit hoher Feuchte angrenzt, dichter gegenüber Wasserdampf ist als der Bereich des Fugendichtungsbandes 10, der an eine Atmosphäre mit niedrigerer Feuchte angrenzt. Jedoch wird in einer typischen Sommer-Situation verhindert, dass Wasserdampf von außen in die Fuge eintritt, wobei gleichzeitig erreicht wird, dass vorhandener Wasserdampf aus der Fuge nach innen heraustritt.

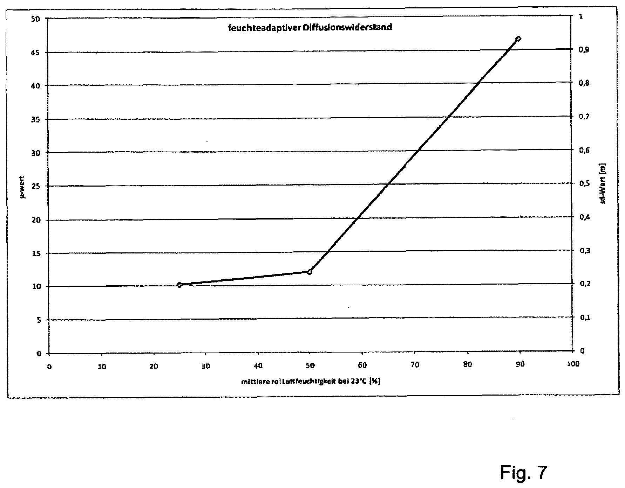

Die in Fig. 7 gezeigte Darstellung des Diffusionswiderstandes eines erfindungsgemäßen Fugendichtungsbandes gegen die mittlere Feuchtigkeit bei 23 °C veranschaulicht den vorgenannten Effekt. Je höher die Luftfeuchtigkeit ist, desto größer wird der Wasserdampfdiffusionswiderstand.

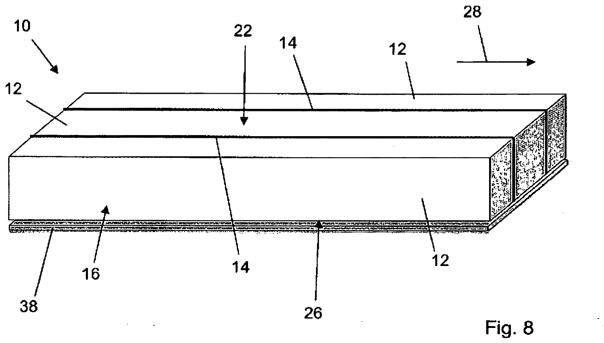

Fig. 8 zeigt einen Ausschnitt eines erfindungsgemäßen Fugendichtungsbandes 10 mit einer Selbstklebeschicht 38 auf der Unterseite 26 in perspektivischer Darstellung mit Hauptblick auf eine Längsseite 16. Das erfindungsgemäße Fugendichtungsband 10 kann mittels dieser Selbstklebeschicht vereinfacht mit einem Bauelement, insbesondere einem Tür- oder Fensterrahmen 34, verbunden werden.

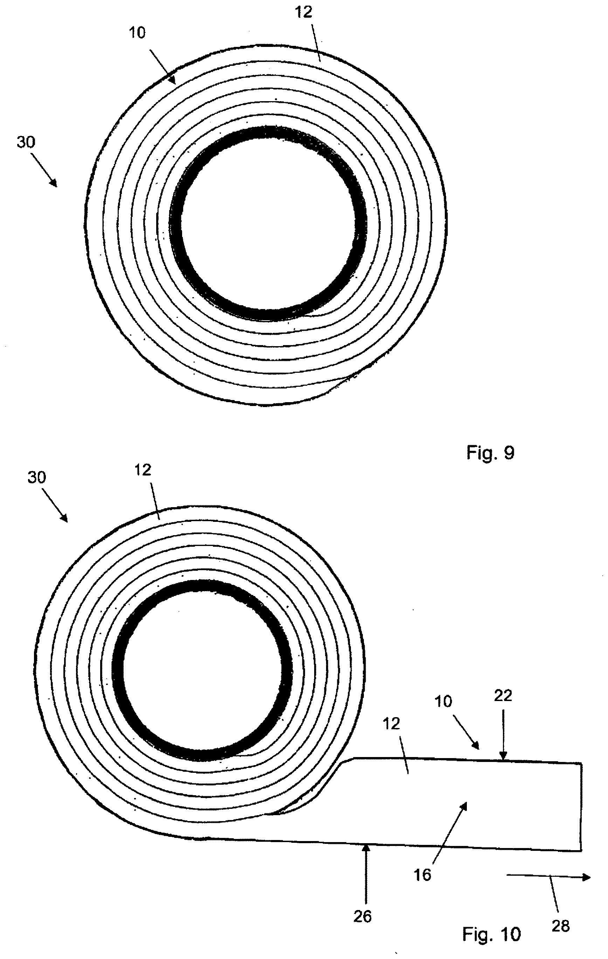

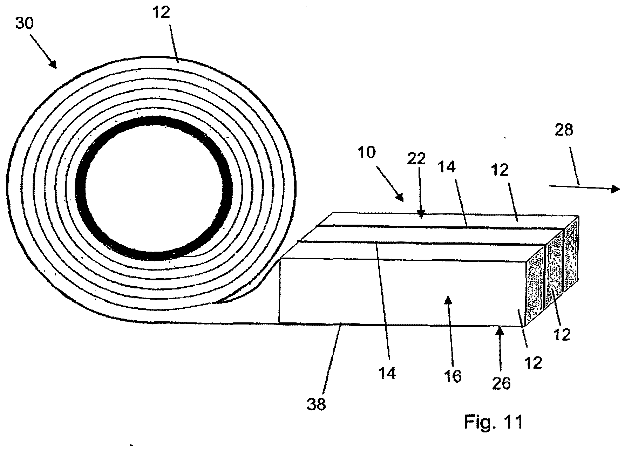

In Fig. 9 ist eine Seitenansicht eines in Rollenform 30 vorrätig gehaltenen und vorkomprimierten erfindungsgemäßen Fugendichtungsbandes 10 dargestellt. Fig. 10 zeigt diese Rollenform bzw. Rolle 30 mit einem bereits abgerollten, sich zurückstellenden Abschnitt des Fugendichtungsbandes 10, wobei in Fig. 11 die erfindungsgemäße Anordnung der Membranschichten 14 im bereits abgerollten, sich zurückstellenden Abschnitt veranschaulicht wird.

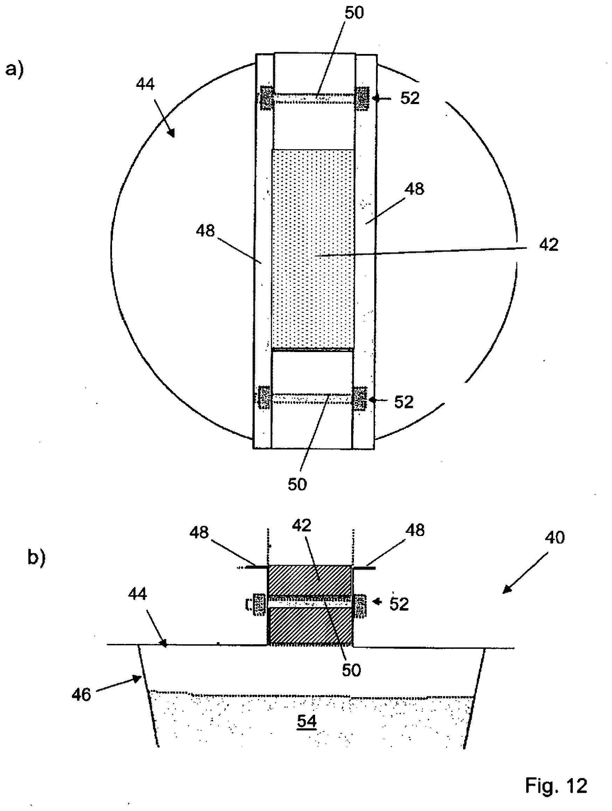

Nachfolgend wird das Wesen der Erfindung noch anhand von Vergleichsprüfungen der Wasserdampfdurchlässigkeit gemäß Fig. 12 an erfindungsgemäßen und nicht erfindungsgemäßen Fugendichtungsbändern bei unterschiedlichen relativen Feuchten der an das Fugendichtungsband 10 angrenzenden Atmosphären dargestellt.

Das erfindungsgemäße Fugendichtungsband 10 besteht aus einem überwiegend offenzelligen Polyurethan-Rohschaum, der mit Acrylaten imprägniert ist. Das Fugendichtungsband weist im Abstand von 19 mm zwei innen liegende Membranschichten aus jeweils einem elastischen Acrylathaftkleber auf.

Zur Bestimmung der Wasserdampfdurchlässigkeit wird ein Abschnitt des erfindungsgemäßen Fugendichtungsbandes 10 mit einer hier nicht erkennbaren Membranschicht verwendet. Eine Vergleichsprüfung wird mit einem entsprechenden nicht erfindungsgemäßen Fugendichtungsband durchgeführt, welche keine Membranschicht aufweist.

Die Bestimmung der Wasserdampfdurchlässigkeit erfolgt nach DIN EN ISO 12572: 2001-09. In Fig. 12 ist ein Prüfgefäß 40 mit Probe 42 zur Bestimmung der Wasserdampfdurchlässigkeit dargestellt, wobei a) eine Draufsicht auf das Deckelteil 44 mit Probe 42 und b) einen Schnitt durch das Deckelteil 44 und Unterteil 46 in Form einer Schale mit Trockenmittel zeigen.

Zwischen die Backen 48 des Deckelteils 44 werden die Proben 42 mittels entsprechender Abstandhalter 50 und Spannschrauben 52 fixiert. Deckelteil 44 und Unterteil 46 werden miteinander dicht verbunden.

Eine erste Prüfung wird bei 50 % relativer Luftfeuchte und 23 °C durchgeführt. Die niedrigere Luftfeuchte wird durch Kieselgel, welches sich im Unterteil befindet eingestellt. Ausgewertet wird nach DIN EN ISO 12572:2001 (µ-Wert, S_{d}-Wert).

Dabei ergeben sich folgende Messergebnisse.

Fugendichtungsband ohne Membranschicht: 0/50% r. F. bei 23°C

| | | |
|---|---|---|
| Diffusionsstrom | g/d | 0,275 |
| | mg/h | 11,47 |
| diffusionsäquivalente Luftschichtdicke s_{d} | m | 0,062 |
| Diffusionswiderstandszahl µ | | 3,1 |

Fugendichtungsband mit einer Membranschicht: 0/50% r. F. bei 23°C

| | | |
|---|---|---|
| Diffusionsstrom | g/d | 0,086 |
| | mg/h | 3,58 |
| diffusionsäquivalente Luftschichtdicke s_{d} | m | 0,203 |
| Diffusionswiderstandszahl µ | | 10,1 |

Der Wasserdampf-Diffusionswiderstand µ der Probe 42 mit innerer Membranschicht beträgt im Mittel 10,1, die der gleichbreiten Proben 42 ohne Membranschicht im Mittel 3,1. Durch die innere Membranschicht wird der Wasserdampf-Diffusionswiderstand µ deutlich erhöht.

Eine zweite Prüfung wird bei 31% / 65% relativer Luftfeuchte und 23 °C durchgeführt. Die niedrigere Luftfeuchte wird durch Calciumchlorid-Lösung 54, welches sich im Unterteil befindet, eingestellt. Das Prüfgefäß wird in einem Klimaschrank zum Einstellen der höheren relativen Luftfeuchte verbracht. Ausgewertet wird nach DIN EN ISO 12572 (µ-Wert, S_{d}-Wert).

Fugendichtungsband mit einer Membranschicht bei: 31/65% r. F. bei 23°C

| | | |
|---|---|---|
| Diffusionsstrom | g/d | 0,072 |
| | mg/h | 3,02 |
| diffusionsäquivalente. Luftschichtdicke s_{d} | m | 0,239 |
| Diffusionswiderstandszahl µ | | 12,0 |

Eine dritte Prüfung wird bei 85% / 93% relativer Luftfeuchte und 23 °C durchgeführt. Die niedrigere Luftfeuchte wird durch gesättigte Ammoniumdihydrogenphosphat-Lösung 54, welches sich im Unterteil befindet, eingestellt. Das Prüfgefäß wird in einem Klimaschrank zum Einstellen der höheren relativen Luftfeuchte verbracht. Ausgewertet wird nach DIN EN ISO 12572 (µ-Wert, S_{d}-Wert).

Fugendichtungsband mit einer Membranschicht bei: 85/93% r. F. bei 23°C

| | | |
|---|---|---|
| Diffusionsstrom | g/d | 0,018 |
| | mg/h | 0,77 |
| diffusionsäquivalente Luftschichtdicke s_{d} | m | 0,932 |
| Diffusionswiderstandszahl µ | | 46,6 |

Der Wasserdampf-Diffusionswiderstand der Proben mit einer innen liegenden Membranschicht beträgt bei einer mittleren relativen Luftfeuchte von 48% im Durchschnitt 12,0. Bei einer mittleren relativen Luftfeuchte von 89% steigt der Wasserdampf-Diffusionswiderstand µ im Durchschnitt auf 46,6 an.

Aus der Bestimmung sd-Wert bzw. µ-Wert "Schaumstoff mit einer Membran" abzüglich der Bestimmung sd-Wert bzw. µ-Wert "Schaumstoff ohne Membran" ergibt sich für die Bestimmung sd-Wert bzw. µ-Wert "Membran" folgender Zusammenhang:

| **Feuchte (23°C)** | **Membranschicht** | **Membranschicht** |
|---|---|---|
| 25% | 0,14 | 7,04 |
| 50 % | 0,18 | 8,85 |
| 90 % | 0,87 | 43,5 |

Nach alledem kann es zweckmäßig sein, wenn eine Membranschicht so ausgebildet ist, dass diese bei einer mittleren relativen Feuchte der sie umgebenden Atmosphäre von bis zu 50 % einen Wasserdampfdiffusionswiderstand (s_{d}-Wert) von kleiner 15 m diffusionsäquivalente Luftschichtdicke und bei einer mittleren relativen Feuchte der sie umgebenden Atmosphäre von mehr als 70 % einen Wasserdampfdiffusionswiderstand (s_{d}-Wert) von größer 30 m diffusionsäquivalente Luftschichtdicke aufweist.

### Bezugszeichenliste

### (ist Bestandteil der Beschreibung)

- 10: Fugendichtungsband
- 12: Schaumstoff
- 14: Membranschicht
- 16: Längsseite
- 18: Längsseite
- 20: Fugenflanke
- 22: Oberseite
- 24: Fugenflanke
- 26: Unterseite
- 28: Längsrichtung
- 30: Rollenform
- 32: Außenwand
- 34: Fensterrahmen
- 36: Querseite
- 38: Selbstklebeschicht
- 40: Prüfgefäß
- 42: Probe
- 44: Deckelteil
- 46: Unterteil (Schale)
- 48: Backe
- 50: Abstandhalter
- 52: Spannschraube
- 54: Sorbens

## Patentansprüche

1. Fugendichtungsband (10) aus Schaumstoff (12), wobei das Fugendichtungsband (10) eine oder vorzugsweise mehrere Membranschichten (14) aufweist, wobei das Fugendichtungsband(10) zwei Längsseiten (16, 18) sowie eine im Einbauzustand des Fugendichtungsbandes (10) an die eine Fugenflanke (20) angrenzende Oberseite (22) und eine im Einbauzustand des Fugendichtungsbandes (10) an die gegenüberliegende Fugenflanke(24) angrenzende Unterseite (26) aufweist, wobeidie Membranschicht (14) oder Membranschichten (14) jeweils in Längsrichtung (28) zwischen Oberseite (22) und Unterseite (26) sowie parallel bzw.nahezu parallel zu den Längsseiten (16, 18)verlaufen, **dadurch gekennzeichnet, dass** die eine oder vorzugsweise die mehreren Membranschichten (14) feuchtevariabel sind.

2. Fugendichtungsband (10) nach Anspruch 1, **dadurch gekennzeichnet, dass** die Zusammensetzung der Membranschicht (14) oder Membranschichten (14), dass die Anordnung der Membranschicht (14) oder Membranschichten (14) und/oder dass die Anzahl der Membranschichten (14) derart gewählt sind, dass das Fugendichtungsband (10) in dem Bereich, der an eine Atmosphäre mit hoher Feuchte angrenzt, dichter gegenüber Wasserdampf ist, als in dem Bereich, der an eine Atmosphäre mit niedrigerer Feuchte angrenzt.

3. Fugendichtungsband (10) nach einem der Ansprüche 1 oder 2, **dadurch gekennzeichnet, dass** der Schaumstoff (12) ein überwiegend offenzelliger Rohschaum ist.

4. Fugendichtungsband (10) nach einem der Ansprüche 1 bis 3, **dadurch gekennzeichnet, dass** der Schaumstoff (12) ein imprägnierter, vorzugsweise ein homogen imprägnierter Rohschaum ist.

5. Fugendichtungsband (10) nach einem der Ansprüche 1 bis 4, **dadurch gekennzeichnet, dass** der Schaumstoff (12) ein vorzugsweise derart mit Acrylaten imprägnierter Rohschaum ist, dass der Wasserdampfdiffusionswiderstand des imprägnierten Rohschaums kleiner ist als der Wasserdampfdiffusionswiderstand wenigstens einer Membranschicht.

6. Fugendichtungsband (10) nach einem der Ansprüche 1 bis 5, **dadurch gekennzeichnet, dass** wenigstens eine Membranschicht (14) aus Klebstoff, vorzugsweise aus einem Acrylathaftklebstoff oder einem Gemisch aus Acrylathaftklebstoff und Polyurethanklebstoff, gebildet ist.

7. Fugendichtungsband (10) nach einem der Ansprüche 1 bis 6, **dadurch gekennzeichnet, dass** wenigstens eine Membranschicht (14) aus wenigstens einem wasserfesten modifizierten Acrylat gebildet ist.

8. Fugendichtungsband (10) nach einem der Ansprüche 1 bis 7, **dadurch gekennzeichnet, dass** wenigstens eine Membranschicht (14) einen größeren Wasserdampfdiffusionswiderstand aufweist als der Schaumstoff (12).

9. Fugendichtungsband (10) nach einem der Ansprüche 1 bis 8, **dadurch gekennzeichnet, dass** wenigstens zwei Membranschichten (14) eine voneinander unterschiedliche Zusammensetzung haben.

10. Fugendichtungsband (10) nach einem der Ansprüche 1 bis 9, **dadurch gekennzeichnet, dass** die Membranschicht (14) oder Membranschichten (14) innerhalb des Schaumstoffs (12) angeordnet sind oder dass das Fugendichtungsband (10) zusätzlich oder anstelle dieser innen liegenden Membranschichten (14) wenigstens eine Membranschicht (14) auf einer oder jeweils beiden Längsseiten (16, 18) aufweist

11. Fugendichtungsband (10) nach einem der Ansprüche 1 bis 10, **dadurch gekennzeichnet, dass** die Membranschicht (14) oder Membranschichten (14) dauerelastisch sind.

12. Fugendichtungsband (10) nach einem der Ansprüche 1 bis 11, **dadurch gekennzeichnet, dass** bei Verwendung von mehreren Membranschichten (14) diese jeweils den gleichen und/oder einen unterschiedlichen Abstand von 5 mm bis 100 mm, vorzugsweise zwischen 5 mm und 13 mm oder vorzugsweise zwischen 14 mm und 20 mm oder vorzugsweise zwischen 21 mm und 30 mm oder vorzugsweise zwischen 31 mm und 100 mm, voneinander aufweisen.

13. Fugendichtungsband (10) nach einem der Ansprüche 1 bis 12, **dadurch gekennzeichnet, dass** die durch die wenigstens eine Membranschicht (14) unterteilten in Längsrichtung (28) verlaufenden Schaumstoffabschnitte (12a, 12b, 12c) derart unterschiedlich ausgebildet sind, dass das Fugendichtungsband (10) in dem Bereich, der an eine Atmosphäre mit hoher Feuchte angrenzt, dichter gegenüber Wasserdampf ist, als in dem Bereich, der an eine Atmosphäre mit niedrigerer Feuchte angrenzt.

14. Fugendichtungsband (10) nach einem der Ansprüche 1 bis 13, **dadurch gekennzeichnet, dass** das Fugendichtungsband (10) komprimierbar, vorzugsweise vorkomprimiert ist.

## Claims

1. A joint sealing tape (10) made of foam material (12), wherein the joint sealing tape (10) has one or preferably more membrane layers (14), wherein the joint sealing tape (10) has two longitudinal sides (16, 18) and an upper side (22) which is adjacent to the one joint edge (20) when the joint sealing tape (10) is in the mounted state, and a lower side (26) which is adjacent to the opposite joint edge (24) when the joint sealing tape (10) is in the mounted state, wherein the membrane layer (14) or membrane layers (14) each run in the longitudinal direction (28) between upper side (22) and lower side (26), as well as parallel or nearly parallel to the longitudinal sides (16, 18), **characterised in that** the one or preferably more membrane layers (14) are moisture-variable.

2. The joint sealing tape (10) according to Claim 1, **characterised in that** the composition of the membrane layer (14) or membrane layers (14), the arrangement of the membrane layer (14) or membrane layers (14) and/or the number of membrane layers (14) are selected such that the joint sealing tape (10) is more tight against water vapour in the region adjacent to an atmosphere with high moisture than in the region adjacent to an atmosphere with lower moisture.

3. The joint sealing tape (10) according to one of Claims 1 to 2, **characterised in that** the foam material (12) is a predominantly open-celled raw foam.

4. The joint sealing tape (10) according to one of Claims 1 to 3, **characterised in that** the foam material (12) is an impregnated, preferably a homogeneously impregnated, raw foam.

5. The joint sealing tape (10) according to one of Claims 1 to 4, **characterised in that** the foam material (12) is a raw foam which is preferably impregnated with acrylates such that the water vapour diffusion resistance of the impregnated raw foam is smaller than the water vapour diffusion resistance of at least one membrane layer.

6. The joint sealing tape (10) according to one of Claims 1 to 5, **characterised in that** at least one membrane layer (14) is formed from an adhesive, preferably from an acrylate pressure-sensitive adhesive, or a mixture of acrylate pressure-sensitive adhesive and polyurethane adhesive.

7. The joint sealing tape (10) according to one of Claims 1 to 6, **characterised in that** at least one membrane layer (14) is formed from at least one waterproof modified acrylate.

8. The joint sealing tape (10) according to one of Claims 1 to 7, **characterised in that** at least one membrane layer (14) has a greater water vapour diffusion resistance than the foam material (12).

9. The joint sealing tape (10) according to one of Claims 1 to 8, **characterised in that** at least two membrane layers (14) have a composition that is different from one another.

10. The joint sealing tape (10) according to one of Claims 1 to 9, **characterised in that** the membrane layer (14) or membrane layers (14) are arranged inside the foam material (12) or that the joint sealing tape (10) has, in addition to or in place of these membrane layers (14) that lie on the inside, at least one membrane layer (14) on one or respectively both longitudinal sides (16, 18).

11. The joint sealing tape (10) according to one of Claims 1 to 10, **characterised in that** the membrane layer (14) or membrane layers (14) are permanently elastic.

12. The joint sealing tape (10) according to one of Claims 1 to 11, **characterised in that,** when several membrane layers (14) are used, they have respectively the same and/or a different spacing of 5 mm to 100 mm, preferably between 5 mm and 13 mm or preferably between 14 mm and 20 mm or preferably between 21 mm and 30 mm or preferably between 31 mm and 100 mm from one another.

13. The joint sealing tape (10) according to one of Claims 1 or 12, **characterised in that** the foam material sections (12a, 12b, 12c) that run in the longitudinal direction (28) and are divided by the at least one membrane layer (14) are configured differently such that the joint sealing tape (10) is more tight against water vapour in the region adjacent to an atmosphere with high moisture than in the region adjacent to an atmosphere with lower moisture.

14. The joint sealing tape (10) according to one of Claims 1 to 13, **characterised in that** the joint sealing tape (10) is compressible, preferably pre-compressed.

## Revendications

1. Bande d'étanchéité de joint (10) en mousse (12), la bande d'étanchéité de joint (10) présentant une ou de préférence plusieurs couches de membrane (14), la bande d'étanchéité de joint (10) présentant deux côtés longitudinaux (16, 18) ainsi qu'un côté supérieur (22) adjacent à l'un des flancs de joint (20) à l'état monté de la bande d'étanchéité de joint (10) et un côté inférieur (26) adjacent au flanc de joint opposé (24) à l'état monté de la bande d'étanchéité de joint (10), la couche de membrane (14) ou les couches de membrane (14) s'étendant respectivement dans la direction longitudinale (28) entre la face supérieure (22) et la face inférieure (26) ainsi que parallèlement ou presque parallèlement aux côtés longitudinaux (16, 18), **caractérisée en ce que** la ou, de préférence, les plusieurs couches de membrane (14) sont hygrovariables.

2. Bande d'étanchéité de joint (10) suivant la revendication 1, **caractérisée en ce que** la composition de la couche de membrane (14) ou des couches de membrane (14), que la disposition de la couche de membrane (14) ou des couches de membrane (14) et/ou que le nombre de couches de membrane (14) sont choisis de façon que, dans la zone qui est adjacente à une atmosphère à forte humidité, la bande d'étanchéité de joint (10) est davantage étanche par rapport à la vapeur d'eau que dans la zone qui est adjacente à une atmosphère à faible humidité.

3. Bande d'étanchéité de joint (10) suivant une des revendications 1 ou 2, **caractérisée en ce que** la mousse (12) est principalement une mousse brute à alvéoles ouvertes.

4. Bande d'étanchéité de joint (10) suivant une des revendications 1 à 3, **caractérisée en ce que** la mousse (12) est une mousse brute imprégnée, de préférence, imprégnée de façon homogène.

5. Bande d'étanchéité de joint (10) suivant une des revendications 1 à 4, **caractérisée en ce que** la mousse (12) est une mousse brute, de préférence, imprégnée d'acrylates, de sorte que la résistance à la diffusion de vapeur d'eau de la mousse brute imprégnée est plus faible que la résistance à la diffusion de vapeur d'eau d'au moins une couche de membrane.

6. Bande d'étanchéité de joint (10) suivant une des revendications 1 à 5, **caractérisée en ce qu'**au moins une couche de membrane (14) est constituée d'adhésif, de préférence, d'un adhésif sensible à la pression à base d'acrylates ou d'un adhésif au polyuréthane.

7. Bande d'étanchéité de joint (10) suivant une des revendications 1 à 6, **caractérisée en ce qu'**au moins une couche de membrane (14) est constituée d'au moins un acrylate modifié résistant à l'eau.

8. Bande d'étanchéité de joint (10) suivant une des revendications 1 à 7, **caractérisée en ce qu'**au moins une couche de membrane (14) présente une résistance à la diffusion de vapeur d'eau plus élevée que la mousse (12).

9. Bande d'étanchéité de joint (10) suivant une des revendications 1 à 8, **caractérisée en ce qu'**au moins deux couches de membrane (14) présentent une composition différente l'une par rapport à l'autre.

10. Bande d'étanchéité de joint (10) suivant une des revendications 1 à 9, **caractérisée en ce que** la couche de membrane (14) ou les couches de membrane (14) sont disposées à l'intérieur de la mousse (12) ou que la bande d'étanchéité de joint (10) présente, en plus, ou, au lieu de ces couches de membrane (14) situées à l'intérieur, au moins une couche de membrane (14) sur un ou respectivement les deux côtés longitudinaux (16, 18).

11. Bande d'étanchéité de joint (10) suivant une des revendications 1 à 10, **caractérisée en ce que** la couche de membrane (14) ou les couches de membrane (14) présentent une élasticité permanente.

12. Bande d'étanchéité de joint (10) suivant une des revendications 1 à 11, **caractérisée en ce qu'**en cas d'utilisation de plusieurs couches de membranes (14), celles-ci présentent respectivement le même écart et/ou un écart différent de 5 mm à 100 mm, de préférence, entre 5 mm et 13 mm ou, de préférence, entre 14 mm et 20 mm ou, de préférence, entre 21 mm et 30 mm ou, de préférence, entre 31 mm et 100 mm les unes par rapport aux autres.

13. Bande d'étanchéité de joint (10) suivant une des revendications 1 à 12, **caractérisée en ce que** les parties de mousses (12a, 12b, 12c), qui sont divisées par l'au moins une couche de membrane (14) et s'étendant dans le sens de la longueur (28), sont conçues de manière différente, de sorte que dans la zone qui est adjacente à une atmosphère à forte humidité, la bande d'étanchéité de joint (10) est davantage étanche par rapport à la vapeur d'eau que dans une zone qui est adjacente à une atmosphère à faible humidité.

14. Bande d'étanchéité de joint (10) suivant une des revendications 1 à 13, **caractérisée en ce que** la bande d'étanchéité de joint (10) est comprimable, de préférence, précomprimée.
